# EUROPÄISCHE PATENTANMELDUNG

(11) **EP 2 666 707 A1**
(43) Veröffentlichungstag der Anmeldung: **27.11.2013**
(21) Anmeldenummer: 12004078.7
(22) Anmeldetag: 25.05.2012
(51) Int. Cl.: B62M 6/55, H02K 7/116

(54) **Elektrischer Antrieb für ein Fahrrad**

(71) Anmelder: Kraft, Klaus, 89134 Blaustein (DE); Frisch, Jürgen, 86420 Diedorf (DE)
(72) Erfinder: Kraft, Klaus, 89134 Blaustein (DE); Frisch, Jürgen, 86420 Diedorf (DE)
(74) Vertreter: Gellner, Bernd

(57) **Zusammenfassung**

Die Erfindung betrifft einen Antrieb mit einem als Außenläufer ausgeführten Elektromotor, der einen Stator (3) und einen Rotor (4) aufweist, wobei der Rotor (4) radial außerhalb des Stators (3) angeordnet ist, und mit einem Exzentergetriebe, welches eine Kurvenscheibe (9, 10) mit Kurvenabschnitten (15) und einen Außenring (13) mit Zähnen (14) umfasst, wobei die Kurvenscheibe (9, 10) in dem Außenring (13) exzentrisch gelagert ist und sich auf den Zähnen (14) des Außenrings (13) abwälzen kann. Die Kurvenscheibe (9, 10) liegt radial außerhalb des Rotors (4) und wird von dem Rotor (4) angetrieben, wobei der Umkreis um den die Kurvenscheibe (9, 10) antreibenden Teil (7, 8) des Rotors (4) exzentrisch zur Rotorachse (6) ausgeführt ist.

## Beschreibung

Die vorliegende Erfindung betrifft einen Antrieb mit einem als Außenläufer ausgeführten Elektromotor, der einen Stator und einen Rotor aufweist, wobei der Rotor radial außerhalb des Stators angeordnet ist, und mit einem Exzentergetriebe, welches eine Kurvenscheibe mit Kurvenabschnitten und einen Außenring mit Zähnen umfasst, wobei die Kurvenscheibe in dem Außenring exzentrisch gelagert ist und sich auf den Zähnen des Außenrings abwälzen kann. Ferner bezieht sich die Erfindung auf ein Zweirad mit einem solchen Antrieb.

Elektrofahrräder, die mit oder ohne Tretunterstützung von einem Elektromotor angetrieben werden, erfreuen sich immer größerer Beliebtheit. Der Elektromotor kann beispielsweise als Nabenmotor im Vorderrad oder Hinterrad oder im Bereich des Tretlagers vorgesehen sein.

Fahrräder mit einem Elektromotor besitzen meist ein Getriebe, um die Drehzahl des Elektromotors an eine für den Fahrer des Fahrrads günstige Drehzahl anpassen zu können.

Aus der DE 10 2008 007 710 A1 ist ein Zweirad mit einem Pedalantrieb und einem Elektromotorantrieb bekannt, wobei die Abtriebswelle des Elektromotors und die Abtriebswelle des Pedalantriebs durch ein Kettengetriebe miteinander gekoppelt sind.

Aus der WO 2012/028227 A1 ist ein Montageset zur Montage eines Elektromotors an ein Fahrrad bekannt.

Die DE 20 2007 002 368 U1 beschreibt ein Fahrrad mit einem Pedalantrieb und einem Elektromotor, welcher als Hohlwellenmotor ausgebildet ist und ringförmig um die Kurbelwelle des Kurbeltriebs angeordnet.

Der Erfindung liegt die Aufgabe zugrunde, einen Antrieb, insbesondere für ein Zweirad, zu entwickeln, welcher platzsparend ist und einen hohen Wirkungsgrad aufweist.

Die Erfindung soll außerdem ein Zweirad, insbesondere Fahrrad, mit einem Elektroantrieb vorschlagen.

Diese Aufgabe wird durch einen Antrieb mit einem als Außenläufer ausgeführten Elektromotor gelöst, wobei der Elektromotor einen Stator und einen Rotor aufweist, wobei der Rotor radial außerhalb des Stators angeordnet ist, und welcher ein Exzentergetriebe aufweist, welches eine Kurvenscheibe mit Kurvenabschnitten und einen Außenring mit Zähnen umfasst, wobei die Kurvenscheibe in dem Außenring exzentrisch gelagert ist und sich auf den Zähnen des Außenrings abwälzen kann, und welches dadurch gekennzeichnet ist, dass die Kurvenscheibe radial außerhalb des Rotors liegt und von dem Rotor angetrieben wird, wobei der Umkreis um den die Kurvenscheibe antreibenden Teil des Rotors exzentrisch zur Rotorachse ausgeführt ist.

Das erfindungsgemäße Zweirad umfasst einen Pedalantrieb und einen Antrieb der oben genannten Art.

Erfindungsgemäß wird ein als Außenläufer ausgeführter Elektromotor eingesetzt. Bei dieser Bauart dreht sich der Rotor außen um den Stator. Die Drehachse des Rotors befindet sich im Zentrum des Stators und fällt mit der Symmetrieachse des Stators zusammen. Die Pole des Rotors sind weiter von der Drehachse des Rotors beabstandet als alle Pole des Stators. Der Rotor kann beispielsweise ring- oder glockenförmig gestaltet sein.

Die Drehzahl des Elektromotors wird mit Hilfe eines Exzentergetriebes herabgesetzt. In dem Exzentergetriebe ist eine Kurvenscheibe exzentrisch in einem Außenring gelagert und kann sich in diesem abwälzen. Der äußere Umfang bzw. das äußere Profil der Kurvenscheibe weist eine Anzahl von gleichartigen Kurvenabschnitten auf, insbesondere stellt das äußere Profil der Kurvenscheibe eine Zykloidenkurve, eine Epizykloidenkurve oder eine Trochoidenkurve dar.

Der Außenring besitzt eine Anzahl von Zähnen, wobei der Begriff "Zähne" alle Arten von Vorsprüngen, Nuten oder Ein- bzw. Ausbuchtungen erfassen soll, in die die

Kurvenabschnitte der Kurvenscheibe eingreifen können. Die Zähne können beispielsweise auch durch feste oder drehbar gelagerte Bolzen realisiert werden.

Bei einem Exzentergetriebe wird die Kurvenscheibe von einem Exzenter angetrieben. Erfindungsgemäß erfolgt der Antrieb der Kurvenscheibe mittels des Rotors. Der die Kurvenscheibe antreibende Teil des Rotors ist hierzu exzentrisch zur Rotorachse ausgeführt. Das heißt, das Zentrum des Umkreises um diesen Teil des Rotors liegt nicht auf der Rotorachse, sondern ist versetzt gegen diese angeordnet.

Die Kurvenscheibe des Exzentergetriebes ist radial außerhalb des Rotors angeordnet und wird von dem Rotor angetrieben. In axialer Richtung ist die maximale Ausdehnung der Kombination aus Elektromotor und Exzentergetriebe geringer als die Summe der axialen Ausdehnung des Elektromotors und der axialen Ausdehnung des Exzentergetriebes. Besonders bevorzugt beträgt die maximale Ausdehnung der Kombination aus Elektromotor und Exzentergetriebe in axialer Richtung nicht mehr als die Ausdehnung des längeren der beiden Einzelteile (Elektromotor und Exzentergetriebe). Vorzugsweise sind die Kurvenscheibe(n) und die Statorpole und Rotormagnete ohne axialen Versatz zueinander angeordnet. Das heißt, in axialer Richtung (in Richtung der Rotorachse) liegt die Kurvenscheibe(n) innerhalb des Bereichs, der durch die Statorpole und/oder Permanentmagnete des Rotors abgedeckt wird. Oder umgekehrt liegen die Statorpole und/oder Permanentmagnete des Rotors innerhalb des Bereichs, über den sich die Kurvenscheibe(n) in axialer Richtung erstrecken. Durch diese Anordnung wird die Baulänge des Antriebs minimiert. Der erfindungsgemäße Antrieb ist damit äußerst kompakt ausgeführt. Die Baulänge des erfindungsgemäßen Antriebs in axialer Richtung beträgt vorzugsweise weniger als 50 mm, weniger als 40 mm oder weniger als 30 mm.

Wie oben beschrieben, wird die Kurvenscheibe von dem Rotor angetrieben. Hierzu kann am äußeren Umfang des Rotors ein Exzenterring vorgesehen sein, welcher exzentrisch zum Rotor angeordnet ist. Der Exzenterring kann als separates Bauteil am Rotor befestigt sein oder auch zusammen mit dem Rotor ein Bauteil bilden. Beispielsweise kann bei der Herstellung des Rotors am äußeren Umfang ein Bereich so bearbeitet werden, zum Beispiel durch Drehen, Fräsen oder allgemein spanabhebende Bearbeitung, dass ein ringförmiger Überstand oder eine ringförmige Erhebung verbleibt, welche als Exzenterring dienen kann.

Anstelle eines sich über den gesamten Umfang des Rotors erstreckenden Exzenterrings ist es auch möglich ein oder mehrere Abschnitte auf dem Rotorumfang vorzusehen, welche gegenüber dem sonstigen Rotorumfang erhoben sind und deren Umkreis, das heißt, ein gedachter die erhobenen Abschnitte von außen berührender Kreis, exzentrisch zur Rotorachse angeordnet ist. Diese Abschnitte oder Erhebungen bilden gewissermaßen einen Exzenterring mit in Umfangsrichtung ein oder mehreren Unterbrechungen.

Der Exzenterring bzw. der Teil des Rotors, der die Kurvenscheibe antreibt, ist exzentrisch zur Rotorachse angeordnet. Vorzugsweise beträgt der Achsversatz zwischen der Rotorachse und dem Mittelpunkt des oben genannten Umkreises zwischen 1 mm und 5 mm, vorzugsweise zwischen 1 mm und 3 mm.

Die Übersetzung des Exzentergetriebes hängt von der Anzahl der Kurvenabschnitte der Kurvenscheibe und der Anzahl der Zähne des Außenrings ab Von Vorteil ist die Anzahl der Zähne des Außenrings um eins oder zwei größer als die Anzahl von Kurvenabschnitten der Kurvenscheibe. Bei einer gesamten Umdrehung des Rotors bewegt sich dann die Kurvenscheibe um ein bzw. zwei Zähne in die entgegengesetzte Richtung. Besitzt der Außenrings beispielsweise 40 Zähne und und die Kurvenscheibe 39 Kurvenabschnitte, so dreht sich die Kurvenscheibe bei jeder vollständigen Umdrehung des Rotors um 1/39 in die entgegengesetzte Richtung. Die Untersetzung des Exzentergetriebes beträgt damit 39:1.

Der Außenring selbst ist feststehend und nicht drehbar gelagert. Die Zähne des Außenrings können einstückig mit oder aus dem Außenring ausgeformt sein. Zum Beispiel können aus dem inneren Umfang des Außenrings in regelmäßigem Abstand Vertiefungen ausgearbeitet sein, beispielsweise ausgefräst sein, so dass die verbleibenden Erhebungen die Zähne bilden, in die die Kurvenscheibe eingreift. Die Zähne können aber auch als getrennte Bauteile an dem Außenring angebracht sein. Die Zähne könne hierbei als relativ zum Außenring feststehende Teile oder als relativ zum Außenring bewegliche Teile vorgesehen sein. Beispielsweise können gleichmäßig über den inneren Umfang des Außenrings verteilt, mehrere drehbar oder nicht drehbar gelagerte Bolzen als Zähne befestigt sein.

Es hat sich als günstig erwiesen, mindestens zwei Kurvenscheiben vorzusehen. Die beiden Kurvenscheiben werden vorzugsweise so angeordnet, dass deren Exzentrität entgegengesetzt ausgerichtet ist, damit die Unwucht des Antriebs möglichst klein gehalten wird. Entsprechend sind zwei oder mehr Exzenterringe oder anderweitige exzentrische Erhebungen am Rotor vorzusehen. Bei zwei Kurvenscheiben wird der Achsversatz der beiden zugehörigen Exzenter genau entgegengesetzt gewählt, d.h. die Mittelpunkte der beiden Exzenter und der Mittelpunkt des Rotors, bilden eine Gerade.

Die Untersetzung des Exzentergetriebes hängt von der Anzahl der Zähne des Außenrings und der Anzahl der Kurvenabschnitte der Kurvenscheibe ab. Von Vorteil beträgt die Anzahl der Kurvenabschnitte der Kurvenscheibe(n) zwischen 30 und 50, vorzugsweise zwischen 35 und 45. Ist die Anzahl der Zähne um eins größer, so wird eine entsprechende Untersetzung zwischen 30 und 50 bzw. 35 und 45 erreicht. Die Anzahl der Zähne der Kurvenscheibe(n) und die des Außenrings unterscheiden sich vorzugsweise um eins oder zwei.

Die Erfindung eignet sich aufgrund ihrer kompakten Bauweise und der geringen Baulänge insbesondere als Antrieb für ein Zweirad. Ein bevorzugter Einsatzbereich ist der Antrieb eines Kettenblatts, insbesondere des Kettenblatts eines Zweirads oder Fahrrads. Die Erfindung lässt sich außerdem von Vorteil als Antrieb einsetzen in leichten Automobilen, elektrisch angetriebenen Rollstühlen, Krankenfahrstühlen oder Movem oder Rangierhilfen für Wohnwagen oder Anhänger.

Beim Einsatz der Erfindung als Antrieb eines Kettenblatts eines Zweirads, insbesondere Fahrrads, ist vorzugsweise ein Freilauf (Motorfreilauf) zwischen Antrieb und Kettenblatt vorgesehen, welcher den Antrieb von dem Kettenblatt entkoppelt, wenn die Drehgeschwindigkeit des Kettenblatts größer als die Drehgeschwindigkeit des Antriebs ist. Bei einem Fahrrad ist das Kettenblatt mit einem Pedalantrieb versehen, um das Kettenblatt durch Muskelkraft zu bewegen. Wenn nun beispielsweise beim Bergabfahren die durch Muskelkraft erzeugte Drehbewegung schneller als die Rotationsgeschwindigkeit des Antriebs ist, wird der Freilauf aktiviert und der Antrieb von dem Kettenblatt entkoppelt, um zu vermeiden, dass der Antrieb die Bewegung des Fahrrads bremst.

Andererseits ist es aber auch günstig, zwischen dem Kettenblatt und der Tretkurbel des Pedalantriebs einen Freilauf (Kurbelfreilauf) vorzusehen, welcher die Tretkurbel von dem Kettenblatt entkoppelt, wenn die Drehgeschwindigkeit des Kettenblatts größer als die Drehgeschwindigkeit der Tretkurbel ist. In dem Fall, in dem der elektrische Antrieb das Kettenblatt schneller antreibt als die Trittfrequenz des Fahrradfahrers ist, wird die Tretkurbel von der Drehbewegung des Kettenblatts entkoppelt, so dass der Fahrradfahrer nicht zu einer ungewollt hohen Trittfrequenz gezwungen wird.

Eine besonders bevorzugte Variante der Erfindung umfasst neben dem erfindungsgemäßen Antrieb beide Arten von Freilauf, nämlich einen Motorfreilauf und einen Kurbelfreilauf.

Der Elektromotor des Antriebs ist als Außenläufer ausgeführt und besitzt vorzugsweise zwischen 20 und 40 Rotorpole, bevorzugt zwischen 24 und 32 Rotorpole. Die Anzahl der Statorpole beträgt von Vorteil 20 bis 40, vorzugsweise 24 bis 32, aufweist, wobei sich die Anzahl der Statorpole von der Anzahl der Rotorpole vorzugsweise um mindestens zwei unterscheidet.

Die Eingangsspannung des Motors beträgt vorzugsweise zwischen 12 Volt und 42 Volt. Der Wirkungsgrad des erfindungsgemäßen Antriebs ist sehr hoch. Je nach Einsatzbereich wird der Antrieb auf Leistungen zwischen 50 W und 4000 W, vorzugsweise zwischen 100 W und 500 W, ausgerichtet.

Ein Fahrrad mit erfindungsgemäßem Antrieb kann beispielsweise eine Stromversorgung mittels eines Akkus aufweisen. Der Akku besitzt von Vorteil eine Kapazität von 100 Wh bis 300 Wh. Einen solchen Akku kann man zum Beispiel im Flaschenhalter eines Fahrrads unterbringen.

Der Elektromotor wird mittels eines Controllers gesteuert. Das Controllergehäuse wird vorzugsweise am Fahhrradrahmen angebracht, so dass es auch als Stütze für den Antrieb, insbesondere zur Aufnahme des Drehmoments, dienen kann.

Die Erfindung sowie weitere Einzelheiten der Erfindung sowie bevorzugte Ausführungsformen sollen anhand der beigefügten Zeichnungen erläutert werden. Hierbei zeigen:
- Figur 1: ein erfindungsgemäß angetriebenes Kettenblatt,
- Figur 2: den Schnitt A-A aus Figur 1 und
- Figur 3: den Schnitt B-B aus Figur 2.

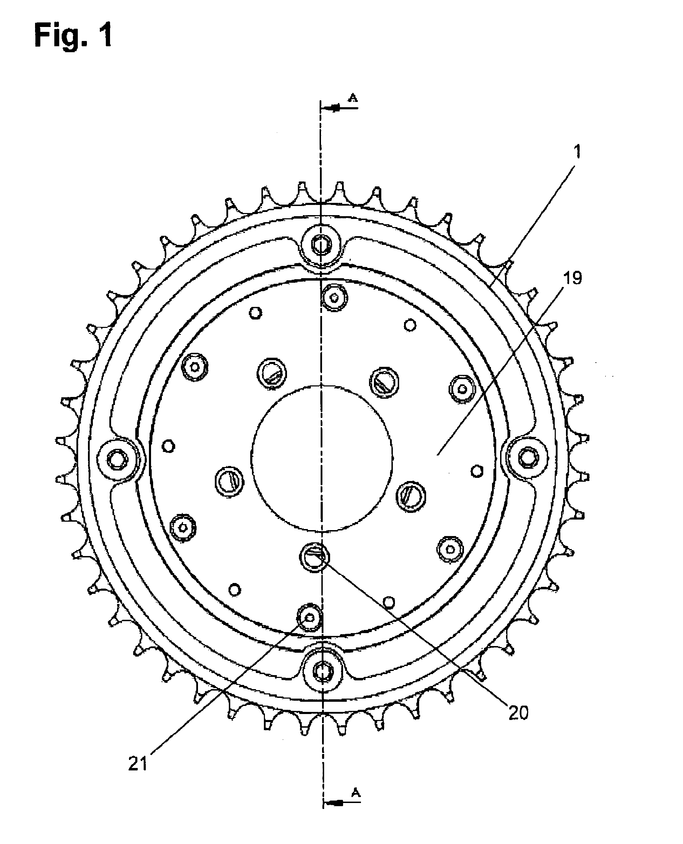

Der erfindungsgemäße Antrieb eignet sich aufgrund seiner geringen Baulänge besonders gut, um das Kettenblatt eines Fahrrads anzutreiben. In den Figuren 1 bis 3 ist ein erfindungsgemäß angetriebenes Kettenblatt 1 dargestellt. Das Kettenblatt 1 wird von einem als Außenläufer ausgeführten Elektromotor angetrieben, dessen Drehzahl mittels eines Exzentergetriebes untersetzt und auf das Kettenblatt 1 übertragen wird. Die Drehzahl des Rotors des Elektromotors beträgt zum Beispiel zwischen 2000 und 4000.

Das Kettenblatt 1 kann außerdem über eine nicht dargestellte Pedalkurbel angetrieben werden. Zwischen dem Kettenblatt 1 und dem Abtrieb des Exzentergetriebes bzw. zwischen dem Kettenblatt 1 und der Kurbel sind ferner ein Motorfreilauf bzw. ein Kurbeffreilauf vorgesehen.

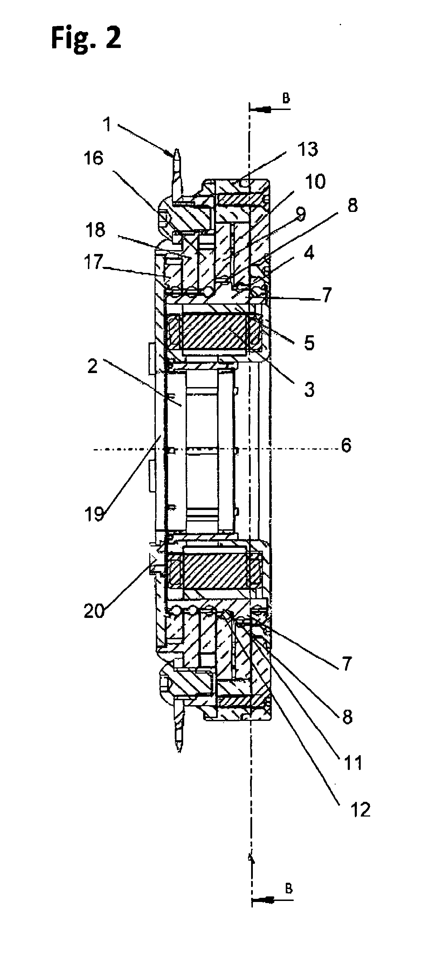

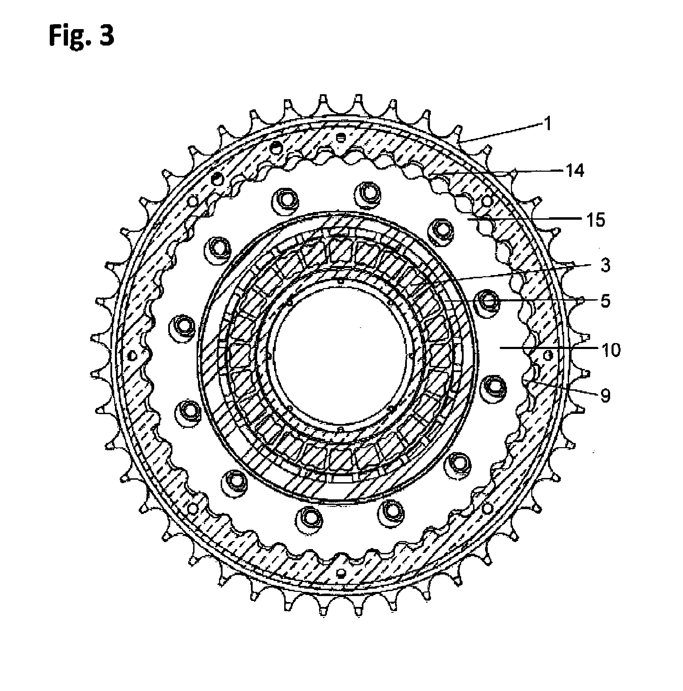

Die Details des erfindungsgemäßen Antriebs sind in den Figuren 2 und 3 deutlicher zu erkennen. Hierbei zeigt Figur 2 einen Schnitt entlang der Linie A-A in Figur 1 und Figur 3 zeigt einen Schnitt entlang der Linie B-B in Figur 2.

Der Antrieb umfasst einen Elektromotor mit einem Stator 3 und einem Rotor 4 mit einer Vielzahl von Permanentmagneten 5. Der Stator 3 weist beispielsweise 24 Pole auf, während der Rotor 4 mit 28 Permanentmagneten 5 versehen ist. Der Elektromotor ist als Außenläufer ausgeführt, d.h. der Rotor 4 dreht sich radial außerhalb des Stators 3. Alle Magnete 5 des Rotors 4 besitzen in radialer Richtung einen größeren Abstand von der Drehachse als die Statorpole.

Der Rotor 4 ist an seinem äußeren Umfang so geformt, dass sich zwei ringförmige, über den gesamten Umfang erstreckende Erhebungen 7, 8 ergeben, welche exzentrisch zur Rotorachse 6 liegen. Die beiden ringförmigen Erhebungen 7, 8 bilden jeweils einen Exzenterring, um Kurvenscheiben 9, 10 anzutreiben. Die Exzentritäten der beiden ringförmigen Erhebungen 7, 8 sind um 180° gegeneinander versetzt.

Radial außerhalb der beiden ringförmigen Erhebungen (Exzenterringe) 7, 8 sind jeweils Kurvenscheiben 9, 10 angeordnet, welche mittels Kugellagern 11, 12 auf den Exzenterringen 7, 8 gelagert sind. Die Kurvenscheiben 9, 10 sind identisch ausgeführt. Das radial äußere Profil der Kurvenscheiben 9, 10 stellt jeweils eine Zykloidenkurve dar, die beispielsweise 39 Zähne oder Erhebungen 15 aufweist.

Die Kurvenscheiben 9, 10 sind abwälzbar in einem Außenring 13 angeordnet. Der Außenring 13 weist 40 Zähne 14 auf, in die die Zähne 15 der Kurvenscheiben 9, 10 eingreifen. Bei einer Umdrehung des Exzenterrings 7 wandert die von diesem Exzenterring 7 angetriebene Kurvenscheibe 9 um einen Zahn weiter. Das heißt, nach 39 Umdrehungen des Exzenterrings 7 hat sich die Kurvenscheibe 9 einmal gedreht. Entsprechendes gilt für den Exzenterring 8 und die zugehörige Kurvenscheibe 10. Das Exzentergetriebe hat damit eine Untersetzung von 1 :39.

Die beiden Exzenterringe 7, 8 sind so angeordnet, dass deren Exzentrität genau entgegengesetzt ausgerichtet ist. An einer bestimmten Position am Außenring 13, an der die Kurvenscheibe 9 gerade die maximale Auslenkung von der Drehachse 6 des Elektromotors hat, hat die andere Kurvenscheibe 10 gerade ihre minimale Auslenkung. Die Unwuchten der beiden Kurvenscheiben 9, 10 werden dadurch gerade aufgehoben.

Die beiden Kurvenscheiben 9, 10 liegen in axialer Richtung, d.h. in Richtung der Rotorachse 6, innerhalb des Bereichs, der durch die Statorpole 3 und die Permanentmagnete 5 des Rotors 4 abgedeckt wird.

Von den beiden Kurvenscheiben 9, 10 wird ein Abtrieb 16 angetrieben. Der Abtrieb 16 dreht sich um den Faktor 39 langsamer als der Rotor 4 des Elektromotors. Von dem Abtrieb 16 wird wiederum das Kettenblatt 1 angetrieben. Der Abtrieb 16 ist mit einem Motorfreilauf versehen. Der Motorfreilauf kann beispielsweise mit KJemmrollen, mit Klemmkörpern oder mit Zahnscheiben (Klinkenfreilauf) realisiert werden. Wenn die durch Muskelkraft erzeugte Drehbewegung der Pedalkurbel schneller als die Rotationsgeschwindigkeit des Abtriebs 16 ist, wird der Freilauf aktiviert und der Antrieb von dem Kettenblatt entkoppelt, um zu vermeiden, dass der Antrieb die Bewegung des Fahrrads bremst.

Das Kettenblatt 1 ist zwischen dem Abtrieb 16 mit Motorfreilauf und einer Kurbelscheibe 19, an der der Kurbelstern (Kurbeispider) für die Pedalkurbel mitels Schrauben 20 befestigt werden kann. Die Kurbelscheibe 19 ist ebenfalls mit einem Freilauf, dem Kurbelfreilauf 17, versehen. Kurbelscheibe 19 und Kurbelfreilauf 17 sind über Schraubverbindungen 21 miteinander verbunden. Der Kurbelfreilauf 17 kann beispielsweise mit Klemmrollen, mit Klemmkörpern oder mit Zahnscheiben realisiert werden. Der Kurbeffreilauf 17 dient dazu, die Kurbelscheibe 19 und die Pedalkurbel vom Antrieb zu entkoppeln, wenn die Rotationsgeschwindigkeit des Abtriebs 16 schneller als die durch Muskelkraft erzeugte Drehbewegung der Pedalkurbel ist.

## Patentansprüche

1. Antrieb mit einem als Außenläufer ausgeführten Elektromotor, der einen Stator (3) und einen Rotor (4) aufweist, wobei der Rotor (4) radial außerhalb des Stators (3) angeordnet ist,
und mit einem Exzentergetriebe, welches eine Kurvenscheibe (9, 10) mit Kurvenabschnitten (15) und einen Außenring (13) mit Zähnen (14) umfasst, wobei die Kurvenscheibe (9,10) in dem Außenring (13) exzentrisch gelagert ist und sich auf den Zähnen (14) des Außenrings (13) abwälzen kann,
**dadurch gekennzeichnet, dass**
die Kurvenscheibe (9, 10) radial außerhalb des Rotors (4) liegt und von dem Rotor (4) angetrieben wird, wobei der Umkreis um den die Kurvenscheibe (9, 10) antreibenden Teil (7, 8) des Rotors (4) exzentrisch zur Rotorachse (6) ausgeführt ist.

2. Antrieb nach Anspruch 1, **dadurch gekennzeichnet, dass** am äußeren Umfang des Rotors (4) ein exzentrisch zur Rotorachse (6) ausgerichteter Exzenterring (7, 8) vorgesehen ist.

3. Antrieb nach einem der vorhergehenden Ansprüche, **dadurch gekennzeichnet, dass** der Achsversatz zwischen dem Mittelpunkt des Umkreises um den die Kurvenscheibe (9, 10) antreibenden Teil (7, 8) des Rotors (4) und der Rotorachse (6) zwischen 1 und 3 mm beträgt.

4. Antrieb nach einem der vorhergehenden Ansprüche, **dadurch gekennzeichnet, dass** die Anzahl der Zähne (14) des Außenrings (13) um eins oder zwei größer ist als die Anzahl von Kurvenabschnitten (15) der Kurvenscheibe (9, 10).

5. Antrieb nach einem der vorhergehenden Ansprüche, **dadurch gekennzeichnet, dass** die Zähne (14) des Außenrings (13) als drehbar gelagerte Körper ausgeführt sind.

6. Antrieb nach einem der vorhergehenden Ansprüche, **dadurch gekennzeichnet, dass** mindestens zwei Kurvenscheiben (9, 10) vorgesehen sind.

7. Antrieb nach einem der vorhergehenden Ansprüche, **dadurch gekennzeichnet, dass** die Anzahl der Kurvenabschnitte (15) der Kurvenscheibe(n) (9, 10) zwischen 30 und 50, vorzugsweise zwischen 35 und 45, liegt.

8. Antrieb nach einem der vorhergehenden Ansprüche, **dadurch gekennzeichnet, dass** ein Kettenblatt (1), insbesondere das Kettenblatt eines Fahrrads, angetrieben wird.

9. Antrieb nach Anspruch 8, **dadurch gekennzeichnet, dass** zwischen Antrieb und Kettenblatt (1) ein Freilauf vorgesehen ist, welcher den Antrieb von dem Kettenblatt (1) entkoppelt, wenn die Drehgeschwindigkeit des Kettenblatts (1) größer als die Drehgeschwindigkeit des Antriebs ist.

10. Antrieb nach einem der Ansprüche 8 oder 9, **dadurch gekennzeichnet, dass** das Kettenblatt (1) mit einer Tretkurbel verbunden ist, wobei zwischen dem Kettenblatt (1) und der Tretkurbel ein Freilauf (17) vorgesehen ist, welcher die Tretkurbel von dem Kettenblatt (1) entkoppelt, wenn die Drehgeschwindigkeit des Kettenblatts (1) größer als die Drehgeschwindigkeit der Tretkurbel ist.

11. Antrieb nach einem der vorhergehenden Ansprüche, **dadurch gekennzeichnet, dass** der Elektromotor zwischen 20 und 40 Rotorpole (5), vorzugsweise zwischen 24 und 32 Rotorpole (5), aufweist.

12. Antrieb nach einem der vorhergehenden Ansprüche, **dadurch gekennzeichnet, dass** der Elektromotor zwischen 20 und 40 Statorpole (3), vorzugsweise zwischen 24 und 32 Statorpole (3), aufweist, wobei sich die Anzahl der Statorpole (3) von der Anzahl der Rotorpole (5) um mindestens zwei unterscheidet.

13. Antrieb nach einem der vorhergehenden Ansprüche, **dadurch gekennzeichnet, dass** der Antrieb eine Leistung zwischen 50 W und 4000 W, vorzugsweise zwischen 100 W und 500 W, liefert.

14. Zweirad, **gekennzeichnet durch** einen Pedalantrieb und einen Antrieb nach einem der vorhergehenden Ansprüche.

15. Verwendung eines Antriebs nach einem der Ansprüche 1 bis 13 in einem Fahrrad, leichten Automobil, Krankenfahrstuhl, Rollstuhl oder einer Rangierhilfe für Anhänger.
